# EUROPEAN PATENT APPLICATION

(11) **EP 2 685 208 A2**
(43) Date of publication of application: **15.01.2014**
(21) Application number: 12754428.6
(22) Date of filing: 08.03.2012
(51) Int. Cl.: G01B 11/25, G01N 21/88

(54) **VISION TESTING DEVICE USING MULTIGRID PATTERN**

(30) Priority: 10.03.2011 KR 20110021427
(71) Applicant: Mer Skilful Feat Co., Ltd, Gunpo-si, Gyeonggi-do 435-776 (KR)
(72) Inventor: PARK, Chan Wha, Gunpo-si Gyeonggi-do 435-776 (KR); OH, Sang Min, Gunpo-si Gyeonggi-do 435-776 (KR); KIM, Sung Hyun, Gunpo-si Gyeonggi-do 435-776 (KR); KOO, Ja Myoung, Gunpo-si Gyeonggi-do 435-776 (KR)
(74) Representative: Gille, Christian
(86) International application number: PCT/KR2012/001706
(87) International publication number: WO 2012/121556

(57) **Abstract**

The present invention relates to a vision testing device using a multigrid pattern for determining good or bad of a testing object by photographing the testing object assembled or mounted during the component assembly process and comparing the photographed image with a previously inputted target image, comprising: a stage part for fixing or transferring the testing object to the testing location; a lighting part for providing lighting to the testing object located on an upper portion of the stage part; a center camera part for obtaining a 2-dimensional image of the testing object located in a center of the lighting part; a irradiating part placed on a side section of the center camera part; a vision processing unit for reading the image photographed by the center camera part and determining good or bad of the testing object; and a control unit for controlling the stage part, the grid pattern irradiating part, the center camera part, wherein the grid pattern irradiating part irradiates grid patterns having periods of different intervals.

## Description

### Technical Field

The present invention relates to a vision testing device. More particularly, the present invention relates to a vision testing device in that a vision test is conducted by using a grid pattern of a large period and a grid pattern of a small period, thereby rapidly and accurately measuring the height of the testing object.

### Background Art

In general, a surface mounting technology SMT of assembling a surface mounting components in a printed circuit board and the like includes a technology for miniaturization/integration of a surface mounting device SMD, a development of precision assembly equipments of exactly assembling these surface mount devices, and a technology of operating various assembly equipments.

Typically, a surface mounting line consists of a surface mounting apparatus and an equipment such as a vision testing device. The surface mounting apparatus is an equipment for mounting the surface mounting device on the printed circuit board. Various surface mounting devices, which are supplied in the form of tapes, sticks and trays, are supplied by feeders and it performs a task to put the surface mounting devices on a mounting position of the printed circuit board.

In addition, the vision testing device checks out the mounting status of the surface mounting device prior to or after the completion of the soldering process of the surface mounting device and the printed circuit board is transferred to the next process depending on the result of the process.

A typical vision testing device includes a lighting part for irradiating a light using a lamp etc., a camera part for photographing image information of various parts mounted on the testing object installed on the upper part of the lighting part, and a half mirror for reflecting the light from the lighting part, illuminating the light on the testing object, and transmitting the shape of the testing object to the camera part.

Here, the lighting part having various lamps is located in the housing. When the lighting part irradiates the light on the testing object, the power is supplied to the plurality of the lamps, thereby irradiating the light thereon.

In the typical vision testing method, when the testing object is horizontally moved through a conveyor, the initial position is adjusted in a position adjusting device and then, the light is irradiated on LED parts or printed circuit boards through the grids. Thereafter, it analyzes the shadow shape formed and reflected on the surface of the testing object by means of the irradiated light, so that the height thereof is measured in three dimensions.

Then, the photographed portions are calculated and the calculated values are compared with the reference value, it can check good or bad of the mounting status of the parts related with the height and check whether the surface mounting parts are mounted or not.

In case of the above test methods, it measures two-dimensional shadow shape and then, the three-dimensional height is calculated through trigonometric functions.

Therefore, to clearly photography and classify the shadow pattern formed by the irradiated light is very important element in the vision testing device using the structured light.

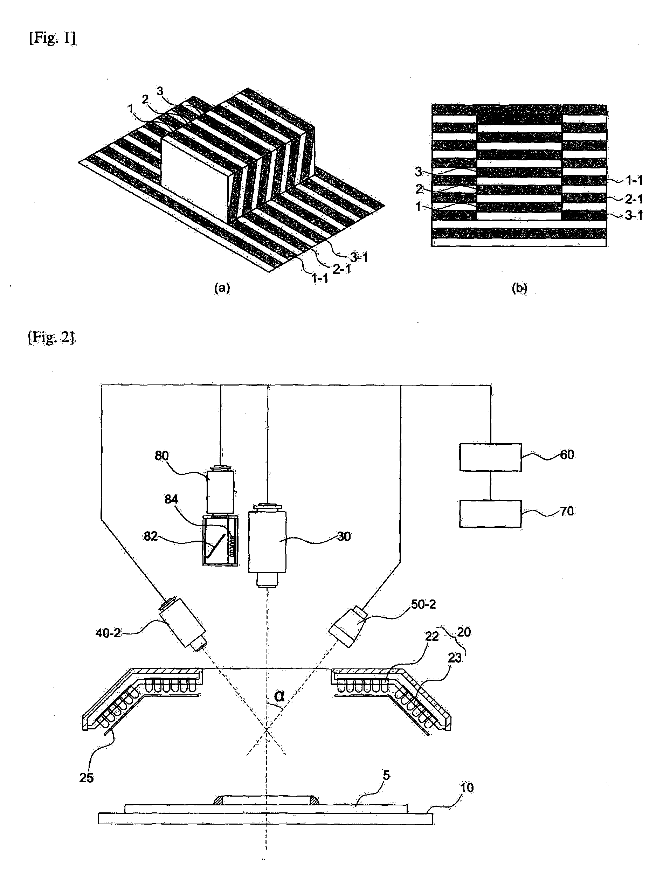

However, as shown in FIG. 1, when the grid pattern light is irradiated on the testing object having the height and it is two-dimensionally photographed, if the height of the testing object is relatively higher than the interval of the grid pattern, it cannot be determined as to whether the grid patterns 1, 2, and 3 irradiated on the upper portion of the testing object are coincided with the grid patterns 1-1, 2-1, and 3-1 formed on the bottom portion thereof from the first or not.

Therefore, these factors can lead to errors in the height test. In order to eliminate these errors, there are problems in that the calculation process necessary for the height test is complicated and the time necessary for the height test is delayed.

### Disclosure

### Technical Problem

Accordingly, the present invention has been made to solve the above-mentioned problems occurring in the prior art, and an object of the present invention is to provide a vision testing device capable of exactly calculating the height thereof even though the height of the testing object is high.

Another object of the present invention is to provide a vision testing device capable of exactly calculating the height thereof and testing it at high speed.

Further another object of the present invention is to provide a vision testing device capable of improving the uniformity of the light irradiated on the surface of the testing object.

Further another object of the present invention is to provide a vision testing device capable of photographing a clear image by eliminating a half mirror arranged in the front of a center camera part.

### Technical solution

In order to accomplish this object, there is provided a vision testing device using a multigrid pattern for determining good or bad of a testing object by photographing the testing object assembled or mounted during the component assembly process and comparing the photographed image with a previously inputted target image, comprising: a stage part for fixing or transferring the testing object to the testing location; a lighting part for providing lighting to the testing object located on an upper portion of the stage part; a center camera part for obtaining a 2-dimensional image of the testing object located in a center of the lighting part; a grid pattern irradiating part placed on a side section of the center camera part; a vision processing unit for reading the image photographed by the center camera part and determining good or bad of the testing object; and a control unit for controlling the stage part, the grid pattern irradiating part, the center camera part, wherein the grid pattern irradiating part irradiates grid patterns having periods of different intervals.

Here, the grid pattern irradiating part comprises a LCD panel or a micromirror module.

Preferably, the grid pattern irradiating part is numerousness and a grid pattern of a large period and a grid pattern of a small period are irradiated simultaneously or sequentially.

Preferably, the interval of the grid pattern of the large period is 3 times through 6 times than that of the grid pattern of the small period.

Preferably, a plurality of lateral camera parts is formed at the side part of the center camera part.

Preferably, the plurality of the grid pattern irradiating parts is opposed to each other around the center camera part.

Preferably, the lateral camera parts are opposed to each other around the center camera part.

Preferably, the grid pattern irradiating part irradiates the grid patterns having various colors.

Preferably, a light diffusion part is additionally formed in the front of the lighting part.

### Advantageous Effects

According to the present invention, it is possible to exactly calculate the height thereof even though the height of the testing object is high.

Also, it is possible to exactly test it at high speed.

Moreover, it is possible to improve the uniformity of the light irradiated on the surface of the testing object.

Furthermore, it is possible to photography the clear image by eliminating a half mirror arranged in the front of a center camera part.

### Brief Description of the Drawings

The above and other objects, features and advantages of the present invention will be more apparent from the following detailed description taken in conjunction with the accompanying drawings, in which:
FIG. 1(a) is a perspective view illustrating a status of irradiating a grid pattern on parts;
FIG. 1(b) is a planar view illustrating a status of irradiating a grid pattern on parts;
FIG. 2 is a schematic side sectional view of a vision testing device according to the present invention;
FIG. 3 is a schematic planar view of a vision testing device according to the present invention; and
FIG. 4 is a conceptual view illustrating the relationship between a period of a grid pattern and a height of parts.

### Best Mode

### Mode for Invention

Hereinafter, an exemplary embodiment of the present invention will be described in detail with reference to the accompanying drawings.

Prior to this, the terms used in the present specification and claims are not limited to the terms used in the dictionary sense. On the basis of the principle that the inventor can define the appropriate concept of the term in order to describe his/her own invention in the best way, it should be interpreted as meaning and concepts for complying with the technical idea of the present invention.

Thus, though the preferred embodiments of the present invention with drawings have been disclosed for illustrative purposes, those skilled in the art will appreciate that various modifications, additions and substitutions are possible.

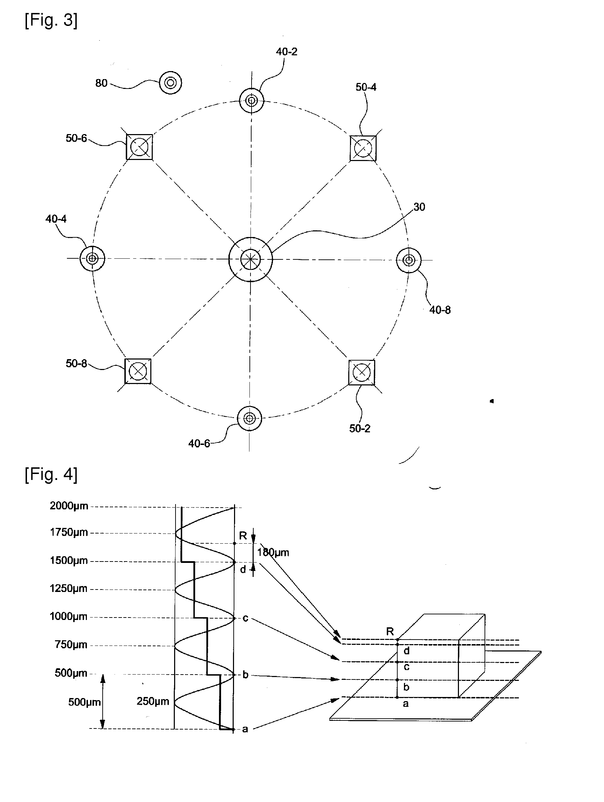

FIG. 2 is a schematic side sectional view of a vision testing device according to the present invention and FIG. 3 is a schematic planar view of a vision testing device according to the present invention.

Referring to FIG. 2 and FIG. 3, the vision testing device according to the present invention is a vision testing device having an improved visibility for determining good or bad of a testing object by photographing the testing object assembled or mounted during the component assembly process and comparing the photographed image with a previously inputted target image, and includes a stage part 10 for fixing or transferring the testing object 5 to the testing location; a lighting part 20 for providing lighting to the testing object 5 located on an upper portion of the stage part 10; a center camera part 30 for obtaining a 2-dimensional image of the testing object located in a center of the lighting part 20; a plurality of grid pattern irradiating parts 50-2, 50-4, 50-6, and 50-8 placed on a side section of the center camera part 30; a vision processing unit 60 for reading the image photographed by the center camera part 30 and determining good or bad of the testing object; and a control unit 70 for controlling the stage part 10, the grid pattern irradiating parts 50-2, 50-4, 50-6, and 50-8, and the center camera part 30, wherein each grid pattern irradiating part 50-2, 50-4, 50-6, and 50-8 irradiates grid patterns having periods of different intervals.

When it inspects the surface mounting device of the printed circuit board in that the work is completed in the surface mounting line, the vision testing device according to the present invention is installed to be able to perform the vision test before moving to the next process through the conveyor of the previous equipment.

Such the vision testing device can be installed in any method to be placed in the space formed between conveyors of the proceeding and following equipments; or can also be used in a solo table form that is not associated with the previous and following equipments.

The stage part 10 is a component for providing a space that the testing object 5 is seated thereon. The stage part 10 can include a position control part (not shown) and a fixing part (not shown) for controlling and fixing the the position of the testing object 5.

The lighting part 20 is continuously or intermittently formed on the upper portion of the stage part 10 along the circumferential direction around the camera part 30.

The lighting part 20 is a component for providing the lighting to the testing object 5 so as to ensure the correct image information of the testing object 5. It can be configured to place a plurality of lamps or LED bulbs thereon so as to illuminate the testing object 5 from all sides.

The lighting part 20 includes a horizontal lighting part 22 and a slope lighting part 23.

Here, the horizontal lighting part 22 is located on the upper portion of the stage part 10 so as to provide a vertically incident light to the testing object 5.

The slope lighting part 23 is disposed on the side of the horizontal lighting part 22 so as to provide a light of a slope direction to the testing object 5.

The center camera part 30 is component for two-dimensionally photographing the testing object 5. Preferably, it may be a CCD (charge coupled device).

The center camera part 30 serves to perform the two-dimensional scan test of the testing object 5 and to measure the height of the testing object by photographing a modified degree of the grid patterns irradiated by the grid pattern irradiating parts 50-2, 50-4, 50-6, and 50-8.

In case of the conventional vision testing device, the half mirror is usually arranged on the front of the center camera part, so that it is possible to photograph the images through the camera by reflecting the light from the lighting part. However, in the present invention, the half mirror is not arranged on the front of the center camera part 30.

Accordingly, it is possible to vividly photograph the image through the center camera part 30.

A plurality of lateral camera parts 40-2, 40-4, 40-6, and 40-8 is formed at the side part of the center camera part 30 and placed symmetrically on the center camera part 30, so that it can eliminate blind spots of images and quickly photograph the images.

As shown in FIG. 3, four lateral camera parts 40-2, 40-4, 40-6, and 40-8 are placed symmetrically on the center camera part 30, so that it can inspect an abnormal position and non-inserting status of the parts arranged on the testing object such as the printed circuit board etc.

The grid pattern irradiating parts 50-2, 50-4, 50-6, and 50-8 are components for irradiate the grid patterns on the testing object 5 so as to measure the height thereof. The grid pattern irradiating parts 50-2, 50-4, 50-6, and 50-8 include a LCD panel or a DMD (digital micromirror display) and a light source.

Accordingly, a shadow of a grid shape is irradiated on the testing object 5 according to the control of the control unit 70 and the a modified degree of the shadow of the grid shape is photographed through the center camera part 30, so that it can calculate the height of the parts.

The grid pattern irradiating parts 50-2, 50-4, 50-6, and 50-8 are placed symmetrically on the center camera part 30, so that it can simultaneously or sequentially to irradiate the grid patterns on the testing object 5.

Here, the grid pattern irradiating parts 50-2, 50-4, 50-6, and 50-8 can irradiate the grid patterns having various colors such as a red or a blue etc. on the testing object 5.

Accordingly, the grid pattern having a larger interval and the grid pattern having a smaller interval are irradiated on the testing object 5 with different colors, so that it can reduce the time required to measure the height of the part and measure a more accurate height thereof.

It is preferred that the angle α between the grid pattern irradiating parts 50-2, 50-4, 50-6, and 50-8 and the center camera part 30 is 25 degrees through 45 degrees.

If the angle α is smaller than 25 degrees, since the modified degree of the grid patterns owing to the height of the parts is small, it can cause errors in the height calculation thereof. If the angle α is larger than 45 degrees, since the modified degree of the grid patterns owing to the height of the parts is small, since the difference of the width between grid patterns irradiated on the near and far sides of the grid pattern irradiating parts 50-2, 50-4, 50-6, and 50-8 is remarkably great, it can cause errors in the height calculation thereof.

When it is placed in the above angle range, the irradiated grid pattern is photographed through the center camera part 30, so that the grid pattern can be appropriately modified according to the height of the testing object.

On the other hand, the vision processing part 60 serves to calculate the image information of the testing object 50 obtained from the camera part through the mathematical process such as a Fourier transform and so on and compare the calculated value with a previously inputted reference value, so that it can determine good or bad of the testing object 5.

The control unit 70 is a component having a motion controller for controlling the driving and the operation of the stage part 10 and the camera part. The control unit 70 can be configured to control the entire driving of the vision testing device according to the present invention.

The control part 70 serves to control the photographing location of vision testing device, process the photographed images, and physically control the lighting part according to a system control program. Also, the control part 70 serves to perform the test operation and the data calculation operation.

Moreover, the control part 70 serves to perform the overall control of the vision testing device such as a control of an outputting device for outputting the working contents and the test results to a monitor and a control of an inputting device for inputting the setting items and the several items by means of the operator.

On the other hand, a light diffusion part 25 such as a light diffusion plate is formed in the front of the lighting part 20, so that the light of the lighting part 20 is evenly irradiated on the entire area of the testing object 5.

Accordingly, since the difference between the dark and light areas of the testing object can be decreased, it can photography the sharper images.

The light diffusion part 25 is constructed in the curved shape from the side section view thereof so as to be arranged in the front of the horizontal lighting part 22 and the slope lighting part 23.

In the meantime, a position confirmation camera part 80 for confirming the position of the testing object is formed at one side portion of the center camera part 30.

Here, a position confirmation lighting part 84 and a half mirror 82 are formed in the front of the position confirmation camera part 80.

Accordingly, in comparison with the conventional vision testing device in that the position of the testing object is confirmed through the center camera part, since the components for confirming the position thereof is accommodated in the housing of the separated position confirmation camera part 80, the housing diameter of the center camera part 30 can be reduced and the management thereof is easier in the case of a part failure.

FIG. 4 is a conceptual view illustrating the relationship between a period of a grid pattern and a height of parts.

Referring to FIG. 4, the grid pattern irradiating process of the vision testing device according to the present invention will be described herein below.

The straight line of a step shape of connecting the points a, b, c, and d conceptually illustrates any height, which can be measured by the grid pattern of a large period.

That is, the grid pattern of the large period has a resolution of 500 micrometers. Thus, the height from 0 to 500 micrometers is recognized as the same height. Also, the height from 500 to 1000 micrometers is recognized as another height.

This is a conceptual description of the resolution, when the height of the parts is measured by using the grid pattern of the large period. The concrete number can be varied depending on the size of the period of the grid pattern.

The grid pattern of the large period is primarily irradiated by means of the grid pattern irradiating parts 50-2, 50-4, 50-6, and 50-8, so that the approximate height of the parts can be measured.

That is, if the height of the hexahedral parts illustrated in Figure 4 is 1,680 micrometers, it can primarily measure the height of the parts corresponding to the range of 1,500 to 2,000 micrometers through the grid pattern of the large period.

Then, the grid pattern of a small period is irradiated, so that the height from point d to point R can be measured as 180 micrometers.

Therefore, the total height of the parts can be measured as 1,500 + 180, that is, 1,680 micrometers.

If the height of the parts is measured through only one the grid pattern of the small period without using the grid pattern of the large period, it cannot be determined as to whether the grid pattern coincided with the grid pattern 1 illustrated on the left side of FIG. 1 corresponds to the grid pattern 1-1, the grid pattern 2-1, or the grid pattern 3-1 illustrated on the right side of FIG. 1. That is, it cannot be determined as to whether the grid patterns formed on the upper portion and the lower portion of the parts are coincided with each other through the elapse of a few periods (grid interval) or not.

Therefore, these factors can lead to errors in the height test. However, in order to eliminate these errors, there are problems in that the calculation process necessary for the height test is complicated and the time necessary for the height test is delayed.

As described above, the vision testing device according to the present invention utilizes the grid pattern of the large period and the grid pattern of the small period having a high resolution together. Accordingly, it can measure the range of the approximate height through the grid pattern of the large period and measure the accurate height thereof by using grid pattern of the small period, thereby rapidly and accurately performing the height test thereof.

The grid pattern of the large period and the grid pattern of the small period are irradiated respectively to be photographed according to the necessary specifications of the height testing device. Or, the grid pattern of the large period is irradiated to be photographed and the grid pattern of the small period is photographed while moving between the grid patterns of the large period, thereby performing a more accurate height measurement.

The grid pattern irradiating parts 50-2, 50-4, 50-6, and 50-8 can irradiate the grid patterns having various colors such as a red or a blue etc. according to the size of the period of the irradiating grid, thereby rapidly and accurately measuring the height of the parts.

That is, the grid pattern of the large period can be irradiated in red and the grid pattern of the small period can be irradiated in blue.

In case of the grid patterns irradiated by the grid pattern irradiating parts 50-2, 50-4, 50-6, and 50-8, the grid pattern of the large period and the grid pattern of the small period can be irradiated simultaneously or sequentially.

That is, the grid pattern of the large period is irradiated through the grid pattern irradiating parts 50-2, 50-4, 50-6, and 50-8 and then, the grid pattern of the small period is irradiated through the grid pattern irradiating parts 50-2, 50-4, 50-6, and 50-8, or the grid pattern of the large period and the grid pattern of the small period can be simultaneously irradiated in red and blue respectively.

It is preferred that the interval of the grid pattern of the large period is 3 times through 6 times than that of the grid pattern of the small period.

If the interval of the grid pattern of the large period is below 3 times, since the difference between the measurement resolutions owing to the size difference of the periods is not large, it is not desirable to measure the exact height. Where the interval of the grid pattern of the large period is more than 6 times, since the difference between the larger period and the small period is too large, it is undesirable in the clarity of the grid shape projected on the testing object.

Although the preferred embodiments of the present invention with drawings have been disclosed for illustrative purposes, those skilled in the art will appreciate that various modifications, additions and substitutions are possible, without departing from the scope and spirit of the invention as disclosed in the accompanying claims.

## Claims

1. A vision testing device using a multigrid pattern for determining good or bad of a testing object by photographing a testing object assembled or mounted during the component assembly process and comparing the photographed image with a previously inputted target image, comprising:
a stage part for fixing or transferring the testing object to a testing location;
a lighting part for providing lighting to the testing object located on an upper portion of the stage part;
a center camera part for obtaining a 2-dimensional image of the testing object located in a center of the lighting part;
a grid pattern irradiating part placed on a side section of the center camera part;
a vision processing unit for reading the image photographed by the center camera part and determining good or bad of the testing object; and
a control unit for controlling the stage part, the grid pattern irradiating part, the center camera part, wherein the grid pattern irradiating part irradiates grid patterns having periods of different intervals.

2. The vision testing device using a multigrid pattern according to claim 1, wherein the grid pattern irradiating part comprises a LCD panel or a micromirror module.

3. The vision testing device using a multigrid pattern according to claim 1, wherein the grid pattern irradiating part is numerousness and a grid pattern of a large period and a grid pattern of a small period are irradiated simultaneously or sequentially.

4. The vision testing device using a multigrid pattern according to claim 1, wherein the interval of the grid pattern of the large period is 3 times through 6 times than that of the grid pattern of the small period.

5. The vision testing device using a multigrid pattern according to claim 1, wherein a plurality of lateral camera parts is additionally formed at the side part of the center camera part.

6. The vision testing device using a multigrid pattern according to claim 3, wherein the plurality of the grid pattern irradiating parts is opposed to each other around the center camera part.

7. The vision testing device using a multigrid pattern according to claim 5, wherein the lateral camera parts are opposed to each other around the center camera part.

8. The vision testing device using a multigrid pattern according to claim 1, wherein the grid pattern irradiating part irradiates the grid patterns having various colors.

9. The vision testing device using a multigrid pattern according to claim 1, wherein a light diffusion part is additionally formed in the front of the lighting part.
